# EUROPEAN PATENT APPLICATION

(11) **EP 1 312 656 A2**
(43) Date of publication of application: **21.05.2003**
(21) Application number: 02025533.7
(22) Date of filing: 13.11.2002
(51) Int. Cl.: C09J 7/02

(54) **Surface-modified pressure-sensitive adhesive, method of modifying surface of pressure-sensitive adhesive and pressure-sensitive adhesive tape**

(30) Priority: 14.11.2001 JP 2001348770
(71) Applicant: NITTO DENKO CORPORATION, Osaka (JP)
(72) Inventor: Banba, Tomohide, Ibaraki-shi, Osaka (JP); Inoue, Tsuyoshi, Ibaraki-shi, Osaka (JP); Wasai, Kanako, Ibaraki-shi, Osaka (JP); Minamizaki, Yoshihiro, Ibaraki-shi, Osaka (JP)
(74) Representative: Grünecker, Kinkeldey, Stockmair & Schwanhäusser Anwaltssozietät

(57) **Abstract**

The surface-modified pressure-sensitive adhesive has a surface-modifying layer made of another polymer and physically fixed to a surface of the pressure-sensitive adhesive; and the method of modifying a surface of a pressure-sensitive adhesive includes the following steps (A) to (C):
step (A): forming a surface-modifying layer made of another polymer on the surface of the pressure-sensitive adhesive without physically fixing the layer to the surface,
step (B): causing molecules of the polymer constituting the surface-modifying layer to diffuse from the pressure-sensitive adhesive surface into inner parts of the adhesive, and
step (C): crosslinking the pressure-sensitive adhesive while keeping the molecular chains of the polymer constituting the surface-modifying layer in the state of being partly embedded in the pressure-sensitive adhesive to thereby physically fix the surface-modifying layer to the surface of the pressure-sensitive adhesive.

## Description

### FIELD OF THE INVENTION

The present invention relates to a surface-modified pressure-sensitive adhesive in which the surface of the pressure-sensitive adhesive has been modified with a layer of another polymer for the purposes of improving or regulating the adhesive properties of the pressure-sensitive adhesive and imparting a new function. The invention further relates to a method of modifying a surface of a pressure-sensitive adhesive and to a pressure-sensitive adhesive tape or sheet which has a pressure-sensitive adhesive layer comprising the surface-modified pressure-sensitive adhesive.

### BACKGROUND OF THE INVENTION

Pressure-sensitive adhesives are extensively used for adhesion to various adherends such as metals, glasses, woods, papers, corrugated boards, plastic materials, etc. Typical examples of pressure-sensitive adhesives include rubber-based pressure-sensitive adhesives comprising as the base polymer a rubber polymer, such as natural rubber, polyisobutylene, or a styrene/isoprene/styrene block copolymer, and acrylic pressure-sensitive adhesives comprising as the base polymer a polymer made up of components derived mainly from an acrylic monomer such as butyl acrylate or 2-ethylhexyl acrylate.

In those pressure-sensitive adhesives, the kind and chemical composition thereof and the like are suitably selected according to the functions desired. In recent years, however, the functions required of pressure-sensitive adhesive tapes have been diversified, and two or more functions have come to be required of a single pressure-sensitive adhesive tape. Examples of the functions required of pressure-sensitive adhesives include functions required of the whole pressure-sensitive adhesive (or bulk) such as stress-relieving properties, high holding power, durability, heat resistance, soundproofing properties, vibration-damping properties, cushioning properties, electrical conductivity, electrical insulating properties, and selective permeability to substances (hereinafter sometimes referred to as "bulk functions") and functions required of the surface of the pressure-sensitive adhesive (interface between the adhesive and an adherend) such as initial adhesive properties, the property of changing in adhesive strength with time, high-strength adhesion, low-strength adhesion, removability, and selectivity for adherends (hereinafter sometimes referred to as "surface functions"). A pressure-sensitive adhesive is required to simultaneously satisfy two or more of these functions. In general, however, there are often cases where it is difficult to simultaneously satisfy the desired bulk function and surface function by merely selecting one pressure-sensitive adhesive layer.

For example, a surface-protective material comprising a support base material and formed thereon a pressure-sensitive adhesive layer comprising polyisobutylene as the main component is known. This surface-protective material has such an excellent weatherability function that it is less apt to suffer an increase in adhesive strength with the lapse of time even upon exposure to sunlight and can be easily removed without leaving an adhesive residue. However, this material is insufficient in the function of initial adhesion to so-called poorly bondable adherends such as decorative steel sheets excellent in water repellency and soiling resistance, or in the function of such workability as a surface-protective material that even when part of the pressure-sensitive adhesive layer comes into contact with another part of the layer, these parts can be easily peeled from each other.

On the other hand, in the case where an acrylic pressure-sensitive adhesive layer is selected for use in the same application as shown above, it is sufficient in the function of satisfactory initial adhesion to poorly bondable adherends and the function of workability as a surface-protective layer. However, the function of weatherability in exposure to sunlight is insufficient.

A technique for overcoming those problems is known which comprises modifying a surface of a pressure-sensitive adhesive so as to impart a bulk function and a surface function separately. Examples of this technique include (i) a method in which a dilute solution of a compound for surface modification is applied to a pressure-sensitive adhesive surface, (ii) a method of surface treatment used for the surface treatment of plastic films, such as corona discharge treatment, plasma treatment, radiation treatment, or optical graft polymerization, and (iii) a method in which a surface layer is fixed with chemical bonds by means of an interfacial contact reaction (see Japanese Patent Laid-Open No. 46112/1998).

However, the conventional techniques described above have various problems as shown below. For example, the method (i) in which a compound for surface modification is applied to a surface of a pressure-sensitive adhesive has a drawback that the strength of fixing of the surface-modifying layer is insufficient. Namely, adhesion at the interface between the surface-modifying layer and the pressure-sensitive adhesive surface is insufficient. Because of this, there are cases where after the pressure-sensitive adhesive tape obtained by this technique is applied, peeling readily occurs at the interface between the surface-modifying layer and the pressure-sensitive adhesive surface, or where the surface-modifying layer suffers a damage due to friction, etc., whereby the effect of the surface modification is lost.

The surface treatment method (ii) enables the surface to have the effect of modification just after the treatment. However, when this method is applied to flexible compositions such as pressure-sensitive adhesives, the effect of modification considerably decreases with the lapse of time due to the diffusion of the modifying layer into inner parts, inward orientation, etc. There are cases where the effect of modification is finally lost almost completely.

Furthermore, in the method (iii) in which a surface layer is fixed with chemical bonds, it is essential that both the polymer to be used for surface modification and the bulk of the pressure-sensitive adhesive (or the polymer as a pressure-sensitive adhesive component) should have functional groups having high reactivity. However, since the kinds and combinations of such functional groups are hence limited, the degree of freedom of the selection of pressure-sensitive adhesives for the bulk and polymers for surface modification is low. Namely, the range in which this technique can be actually utilized is limited.

### SUMMARY OF THE INVENTION

Accordingly, an aim of the invention is to provide a surface-modified pressure-sensitive adhesive which is free from those problems of conventional techniques, a method of modifying a surface of a pressure-sensitive adhesive, and a pressure-sensitive adhesive tape or sheet having a pressure-sensitive adhesive layer comprising the surface-modified pressure-sensitive adhesive.

Specifically, the aim of the invention is to provide a surface-modified pressure-sensitive adhesive having a surface-modifying layer highly tenaciously fixed to the pressure-sensitive adhesive surface, a method of modifying a surface of a pressure-sensitive adhesive, and a pressure-sensitive adhesive tape or sheet having a pressure-sensitive adhesive layer comprising the surface-modified pressure-sensitive adhesive.

Another aim of the invention is to provide a surface-modified pressure-sensitive adhesive excellent in the degree of freedom of the selection of polymers usable for forming its surface-modifying layer, a method of modifying a surface of a pressure-sensitive adhesive, and a pressure-sensitive adhesive tape or sheet having a pressure-sensitive adhesive layer comprising the surface-modified pressure-sensitive adhesive.

The present inventors made intensive investigations in order to accomplished those aims. As a result, it has been found that when a surface of a pressure-sensitive adhesive is modified with another polymer by causing molecules of the polymer constituting a surface-modifying layer to diffuse from the pressure-sensitive adhesive surface to inner parts of the adhesive and then crosslinking the pressure-sensitive adhesive, then the surface-modifying layer made of that polymer can be tenaciously fixed to the pressure-sensitive adhesive surface. The invention has been completed based on this finding.

Namely, the invention provides a surface-modified pressure-sensitive adhesive which comprises a pressure-sensitive adhesive and a surface-modifying layer made of another polymer, the surface-modifying layer being physically fixed to a surface of the pressure-sensitive adhesive.

The surface-modified pressure-sensitive adhesive preferably is one in which molecules of the polymer constituting the surface-modifying layer have been diffused from the pressure-sensitive adhesive surface into inner parts of the adhesive and the pressure-sensitive adhesive has been crosslinked while the molecular chains of the polymer constituting the surface-modifying layer are kept being partly embedded in the pressure-sensitive adhesive. The surface-modifying layer may have a thickness of 1 µm or smaller.

The invention further provides a method of modifying a surface of a pressure-sensitive adhesive by forming a surface-modifying layer physically fixed to the pressure-sensitive adhesive surface, the method comprising the following steps (A) to (C):
step (A): forming a surface-modifying layer made of another polymer on the surface of the pressure-sensitive adhesive without physically fixing the layer to the surface;
step (B): causing molecules of the polymer constituting the surface-modifying layer to diffuse from the pressure-sensitive adhesive surface into inner parts of the adhesive; and
step (C): crosslinking the pressure-sensitive adhesive while keeping the molecular chains of the polymer constituting the surface-modifying layer in the state of being partly embedded in the pressure-sensitive adhesive to thereby physically fix the surface-modifying layer to the surface of the pressure-sensitive adhesive.

The invention furthermore provides a pressure-sensitive adhesive tape or sheet which has a pressure-sensitive adhesive layer comprising the surface-modified pressure-sensitive adhesive described above.

### BRIEF DESCRIPTION OF THE DRAWINGS

Fig. 1 is a graphic presentation showing the results of an examination in which the surfaces of the pressure-sensitive adhesives obtained in Examples 1 and 2 and Comparative Example 1 were analyzed by X-ray photoelectron spectroscopy and were subjected to C₁S waveform analysis.
Fig. 2 is a view illustrating a TEM photograph of a section around the surface of the surface-modified polyisobutylene-based pressure-sensitive adhesive obtained in Example 1.
Fig. 3 is a graphic presentation showing the results of an examination of the pressure-sensitive adhesive of Example 1 in which the surface of the pressure-sensitive adhesive was analyzed by X-ray photoelectron spectroscopy and were subjected to C₁S waveform analysis before and after an adhesion evaluation test.
Fig. 4 is a graphic presentation showing the results of an examination of the pressure-sensitive adhesive of Comparative Example 1 in which the surface of the pressure-sensitive adhesive was analyzed by X-ray photoelectron spectroscopy and were subjected to C₁S waveform analysis before and after an adhesion evaluation test.

### DETAILED DESCRIPTION OF THE INVENTION

### <Surface-Modified Pressure-Sensitive Adhesive>

The surface-modified pressure-sensitive adhesive of the invention comprises pressure-sensitive adhesive layers which include: a pressure-sensitive adhesive base layer made of a pressure-sensitive adhesive; and a surface-modifying layer which is made of another polymer and physically fixed to a surface of the pressure-sensitive adhesive base layer. Consequently, the surface-modifying layer is highly tenaciously fixed to the pressure-sensitive adhesive surface.

### <Pressure-Sensitive Adhesive Base Layer>

The pressure-sensitive adhesive constituting the pressure-sensitive adhesive base layer is not particularly limited, and any of known pressure-sensitive adhesives and the like, such as, e.g., acrylic pressure-sensitive adhesives and rubber-based pressure-sensitive adhesives, can be used. The acrylic pressure-sensitive adhesives generally comprise as the base polymer a copolymer of a monomer mixture comprising one or more alkyl acrylates as the main monomer(s), such as butyl acrylate, 2-ethylhexyl acrylate, isooctyl acrylate, isononyl acrylate, and ethyl acrylate, and one or more modifying monomers selected from cyano-containing vinyl compounds such as acrylonitrile, vinyl esters such as vinyl acetate, aromatic vinyl compounds such as styrene, alkyl methacrylates such as methyl methacrylate, carboxyl-containing vinyl compounds such as acrylic acid, vinyl compounds containing an acid anhydride group, such as maleic anhydride, vinyl-containing heterocyclic compounds such as vinylpyrrolidone, epoxy-containing vinyl compounds such as glycidyl methacrylate, amino-containing vinyl compounds such as dimethylaminoethyl methacrylate, hydroxyl-containing vinyl compounds such as hydroxyethyl acrylate, amide group-containing vinyl compounds such as acrylamide, and the like.

The rubber-based pressure-sensitive adhesives generally comprise as the base polymer a rubber polymer selected from natural rubber, styrene/isoprene/styrene block copolymers, styrene/butadiene/styrene block copolymers, styrene/ethylene-butylene/styrene block copolymers, styrene-butadiene rubbers, polybutadiene, polyisoprene, polyisobutylene, butyl rubber, chloroprene rubber, silicone rubbers, and the like.

Additives can be suitably incorporated into those pressure-sensitive adhesives. Examples thereof include tackifier resins such as rosin resins, terpene resins, styrene resins, aliphatic petroleum resins, aromatic petroleum resins, xylene resins, phenolic resins, coumarone-indene resins, and hydrogenation products of these resins. Examples of the additives further include softeners such as liquid resins, liquid rubbers, polybutene, process oils, and dioctyl phthalate, antioxidants, fillers, pigments, and crosslinking agents.

The pressure-sensitive adhesive base layer can be formed, for example, by applying any of those pressure-sensitive adhesives in a solution or aqueous dispersion form to a base material and drying the coating to remove the solvent or water, or by applying any of those pressure-sensitive adhesives by hot-melt coating or calender coating. Alternatively, the pressure-sensitive adhesive base layer may be formed by applying a monomer or oligomer as a precursor for a pressure-sensitive adhesive to a base material and irradiating the resultant coating with ultraviolet to photopolymerize the monomer or oligomer.

The pressure-sensitive adhesive base layer can have a thickness selected from a wide range according to the intended use, kind of the adherend, etc. However, the thickness thereof is generally about from 1 to 10,000 µm, preferably about from 10 to 1,000 µm. The pressure-sensitive adhesive base layer may consist of a single layer or may be composed of two or more layers.

The base material is not particularly limited as long as it has self-supporting properties. Examples thereof include plastic films or sheets made of a polymer such as a polyester, e.g., poly(ethylene terephthalate), or an olefin resin, e.g., polypropylene, papers, fabrics, metal foils, and release papers. The base material may consist of a single layer or may be composed of two or more layers. The base material is not particularly limited also in thickness, etc.

### <Surface-Modifying Layer>

The surface-modifying layer has been formed on a surface of the pressure-sensitive adhesive so as to modify the pressure-sensitive adhesive surface. It is therefore important that the surface-modifying layer be constituted of a polymer different from the polymer (base polymer) serving as the pressure-sensitive adhesive component of the pressure-sensitive adhesive constituting the pressure-sensitive adhesive base layer. The polymer to be used for forming this surface-modifying layer may be any polymer or polymer composition as long as it is capable of forming a layer (in particular, a thin film or thin layer) on the pressure-sensitive adhesive surface. A suitable polymer or polymer composition can be selected according to the surface function required. For example, the polymer different from the polymer of the pressure-sensitive adhesive may be: a polymer which has the same main monomer components as the polymer of the pressure-sensitive adhesive but differs from it in comonomer components; a polymer which has the same main monomer components and the same comonomer components as the polymer of the pressure-sensitive adhesive but differs from it in the proportion of the comonomer components; or a polymer which has the same composition as the polymer of the pressure-sensitive adhesive but differs from it in a factor regarding molecular weight, e.g., weight-average molecular weight (or number-average molecular weight) or molecular weight distribution. It is a matter of course that the polymer different from the polymer of the pressure-sensitive adhesive may be a polymer composition differing in polymer combination.

In the invention, no chemical reaction between the polymer (pressure-sensitive adhesive component) of the pressure-sensitive adhesive base layer and the polymer of the surface-modifying layer, such as interfacial contact reaction, is utilized. Because of this, the polymer constituting the surface-modifying layer need not have specific reactive functional groups in the molecule and there are no limitations on combinations of functional groups, etc. Consequently, there are no particular limitations on combinations of the polymers for the respective layers, and polymers in an exceedingly wide range can be used. The polymer to be used for forming the surface-modifying layer may be a thermoplastic resin, thermosetting resin, or ultraviolet-curable resin, or may be an elastomer or rubber. The polymer may be either an organic polymer or an inorganic polymer. Furthermore, a polymer usually used as a pressure-sensitive adhesive (e.g., an acrylic polymer, rubber polymer, or silicone polymer) can be used as the polymer for forming the surface-modifying layer. Such polymers for forming the surface-modifying layer can be used alone or in combination of two or more thereof.

Examples of the polymer (or kind thereof) of the surface-modifying layer include acrylic resins (e.g., poly((meth)acrylic ester)s and copolymers of a (meth)acrylic ester with other copolymerizable monomer(s)), polyester resins (e.g., poly(ethylene terephthalate), poly(butylene terephthalate), and poly(ethylene naphthalate)), olefin resins (e.g., polyethylene, polypropylene, and copolymers of ethylene or propylene with other α-olefin(s) or copolymerizable monomer(s), such as ethylene/vinyl acetate copolymers), styrene resins (e.g., polystyrene and copolymers of styrene with other copolymerizable monomer(s), such as ABS resins and AS resins), vinyl chloride resins (e.g., poly(vinyl chloride) and copolymers of vinyl chloride with other copolymerizable monomer(s)), poly(vinylidene chloride), fluororesins (e.g., polytetrafluoroethylene), polyamide resins (e.g., nylon-6, nylon-6,6, and nylon-12), polycarbonates (e.g., bisphenol A polycarbonate), polyimides, polyacetals, poly(meth)acrylonitrile, polyethersulfones, polynorbornene, polyaryls, poly(arylene ether)s, polyarylates, poly(phenylene ether)s, poly(phenylene sulfide), polysulfones, polyethersulfones, polyetheretherketones, poly(vinyl alcohol), silicone resins (e.g., polysiloxanes having alkyl or phenyl groups, such as polydimethylsiloxane, polymethylphenylsiloxane, and polydiphenylsiloxane), polyurethane resins, phenolic resins, epoxy resins, melamine resins, silicon compound resins, polydienes (e.g., polyisoprene and polybutadiene), natural rubber, and synthetic rubbers (e.g., styrene/isoprene/styrene block copolymers, styrene/butadiene/styrene block copolymers, styrene/ethylene-butylene/styrene block copolymers, styrene-butadiene rubbers, polybutadiene, polyisoprene, polyisobutylene, butyl rubber, chloroprene rubber, and silicone rubbers). The weight-average molecular weight of the polymer of the surface-modifying layer is not particularly limited, and can be suitably selected according to purposes, etc.

The thickness of the surface-modifying layer can be suitably selected according to the intended use, etc. However, the layer preferably is thin. The thickness of the surface-modifying layer can be selected, for example, from the range up to 1 µm (e.g., about from 0.001 to 1 µm), preferably up to 0.5 µm (e.g., about from 0.001 to 0.5 µm). Too large thicknesses of the surface-modifying layer (e.g., exceeding 1 µm) are undesirable in that there is a possibility that the properties of the surface-modifying layer might influence the pressure-sensitive adhesive base layer (bulk layer) to impair the function required of the bulk layer. The surface-modifying layer may consist of a single layer or may be composed of two or more layers.

### <Method of Modifying Surface of Pressure-Sensitive Adhesive>

In the invention, the surface-modifying layer physically fixed to a surface of the pressure-sensitive adhesive can be formed by the method of modifying a pressure-sensitive adhesive surface which comprises the following steps (A) to (C):
step (A): forming a surface-modifying layer made of another polymer on the surface of the pressure-sensitive adhesive without physically fixing the layer to the surface;
step (B): causing molecules of the polymer constituting the surface-modifying layer to diffuse from the pressure-sensitive adhesive surface into inner parts of the adhesive; and
step (C): crosslinking the pressure-sensitive adhesive while keeping the molecular chains of the polymer constituting the surface-modifying layer in the state of being partly embedded in the pressure-sensitive adhesive to thereby physically fix the surface-modifying layer to the surface of the pressure-sensitive adhesive.

### <Step (A)>

In step (A), a surface-modifying layer made of another polymer is formed on the surface of the pressure-sensitive adhesive without physically fixing the layer to the surface. Namely, a surface-modifying layer is formed which is not in the state of being physically fixed to the pressure-sensitive adhesive surface. This surface-modifying layer is a layer superposed on the pressure-sensitive adhesive base layer, which comprises a pressure-sensitive adhesive. Consequently, a known or common technique for layer formation (in particular, a technique capable of forming a thin layer) can be employed in step (A). Examples thereof include a method in which a solution of a polymer for forming the surface-modifying layer is applied to the pressure-sensitive adhesive base layer and then dried. Preferred techniques usable for this application include: a dipping method in which the pressure-sensitive adhesive is immersed in a solution (in particular, dilute solution) of a polymer for forming the surface-modifying layer and then pulled out therefrom; a method in which a solution (in particular, dilute solution) of a polymer for forming the surface-modifying layer is applied to the pressure-sensitive adhesive surface with a die coater, kiss-roll coater, roll coater, squeeze-roll coater, spin coater, or the like; and a method in which a solution (in particular, dilute solution) of a polymer for forming the surface-modifying layer is applied to the pressure-sensitive adhesive surface by spray coating or the like.

### <Step B>

In step (B), molecules of the polymer of the surface-modifying layer obtained in step (A) described above (i.e., the surface-modifying layer formed on the pressure-sensitive adhesive surface without physical fixing) are diffused from the pressure-sensitive adhesive surface into inner parts of the pressure-sensitive adhesive. Methods for this molecular diffusion are not particularly limited, and a known or common method can be employed. It is known, as shown by recent investigations on polymers, that when polymers (which may be the same or different) are brought into contact with each other, mutual molecular diffusion occurs at the interface between these. There is hence no need of taking a special measure for the diffusion. However, it is preferred to secure a given time period for the diffusion and to accelerate the diffusion of polymer molecules by applying an external energy, e.g., heating. The time period of the diffusion, heating temperature, and the like are not particularly limited and can be suitably selected according to the kind of the polymer for forming the surface-modifying layer.

### <Step (C)>

In step (C), the pressure-sensitive adhesive is crosslinked while keeping the molecular chains of the polymer constituting the surface-modifying layer in the state of being partly embedded in the pressure-sensitive adhesive, after the molecular diffusion in step (B) described above. Thus, the surface-modifying layer is physically fixed to the pressure-sensitive adhesive surface. Methods for crosslinking the pressure-sensitive adhesive are not particularly limited, and a known or common method for crosslinking pressure-sensitive adhesives can be employed. Examples thereof include (1) a method in which a polyfunctional compound is added which has two or more functional groups reactive with functional groups contained in the molecular chains of the pressure-sensitive adhesive and (2) a method in which a compound containing two or more unsaturated hydrocarbon groups is added.

More specifically, the method (1) in which a polyfunctional compound is added can be conducted, for example, in the following manners. In the case where the functional groups of the polymer serving as the pressure-sensitive adhesive component of the pressure-sensitive adhesive are carboxyl groups, a polyfunctional compound having in the molecule two or more functional groups reactive with the carboxyl groups, such as epoxy, isocyanate, amino, or silanol groups, can be added. On the other hand, in the case where the polymer of the pressure-sensitive adhesive has no functional groups, use can be made of a method in which a compound having a structure akin to that of the pressure-sensitive adhesive and containing functional groups in the molecular chain is added beforehand and a polyfunctional compound containing two or more functional groups reactive with those functional groups is added. For example, when the pressure-sensitive adhesive is a polyisobutylene-based pressure-sensitive adhesive, a functional-group-modified polyisobutylene can be added beforehand in which part (e.g., ends) of the molecule has been modified with functional groups (e.g., hydroxyl or vinyl), because the polyisobutylene as the adhesive base polymer contains no functional groups in the molecule. In this case, when the functional groups of the functional-group-modified polyisobutylene are hydroxyl groups located at the ends, then a polyfunctional compound having in the molecule two or more isocyanate or silanol groups or the like, which are functional groups reactive with the hydroxyl groups, can be added.

The two or more functional groups of the polyfunctional compound may be of at least one kind. Namely, the polyfunctional compound may have two or more of the same functional group or may have two or more kinds of functional groups in a total number of 2 or larger.

In the method (2) in which a compound containing two or more unsaturated hydrocarbon groups is added, a free-radical initiator can be added according to need. When the compound having unsaturated hydrocarbon groups is reacted, an external energy such as heat, ultraviolet, or electron beams can be applied (in the case of ultraviolet or electron beams, for example, the pressure-sensitive adhesive is irradiated therewith).

### <Pressure-Sensitive Adhesive Tape or Sheet>

By disposing the surface-modified pressure-sensitive adhesive described above on a base material, a pressure-sensitive adhesive tape or sheet is obtained. Namely, the pressure-sensitive adhesive tape or sheet of the invention has a pressure-sensitive adhesive layer comprising the surface-modified pressure-sensitive adhesive described above. This pressure-sensitive adhesive tape or sheet, which has a pressure-sensitive adhesive layer comprising the surface-modified pressure-sensitive adhesive, combines a bulk function required of the pressure-sensitive adhesive and a surface function required of the surface (interface between the tape or sheet and an adherend). Namely, it simultaneously satisfies two or more functions. In addition, since no chemical reaction between the pressure-sensitive adhesive base layer and the surface-modifying layer is utilized in fixing the surface-modifying layer to the base layer, there is no limitation on combinations of functional groups, etc. in material selection, and the pressure-sensitive adhesive base layer and the surface-modifying layer can be separately designed/optimized. Consequently, a pressure-sensitive adhesive tape or sheet having better functions can be obtained. Furthermore, since an exceedingly wide range of combinations of the two layers can be used, pressure-sensitive adhesive tapes or sheets suitable for use in various applications can be obtained.

The invention will be explained below in detail by reference to Examples, but the invention should not be construed as being limited to these Examples in any way.

### EXAMPLE 1

Polyisobutylene having a weight-average molecular weight of 800,000 was dissolved in toluene so as to result in a solid concentration of 10% by weight to thereby obtain a polyisobutylene solution. To 100 parts by weight on a solid basis (polyisobutylene) of this polyisobutylene solution was added 6 parts by weight of a polyisobutylene modified with a hydroxyl group at each end and having a number-average molecular weight of 5,600 (manufactured by Kaneka Corp.). Thereto were further added 1 part by weight of a polyfunctional isocyanate compound (trade name "Coronate HX", manufactured by Nippon Polyurethane Co., Ltd.) and 0.1 part by weight of dioctyltin dilaurate (trade name "OL-1", manufactured by Tokyo Fine Chemical Co., Ltd.) as a reaction catalyst. These ingredients were mixed uniformly. The resultant solution was applied to a 40 µm-thick plastic film made of a polypropylene/polyethylene blend (weight ratio, 9/1). The coating was dried at 80°C for 3 minutes to form a polyisobutylene-based pressure-sensitive adhesive layer having a thickness of 10 µm on the plastic film.

On the other hand, an acrylic polymer (copolymer) having a weight-average molecular weight of about 500,000 formed from 100 parts by weight of butyl acrylate and 1 part by weight of glycidyl methacrylate was dissolved in ethyl acetate so as to result in a solid concentration of 0.05% by weight. Thus, an acrylic polymer solution was obtained.

Before the crosslinking reaction of the polyisobutylene-based pressure-sensitive adhesive layer proceeded sufficiently, the plastic film having the polyisobutylene-based pressure-sensitive adhesive layer was treated in the following manner. The plastic film was immersed in the acrylic polymer solution for 1 minute, subsequently vertically pulled out of the solution at a rate of 40 mm/min, and then dried at 80°C for 3 minutes. Thus, a thin layer of the acrylic polymer (surface-modifying layer) was physically formed on the surface of the polyisobutylene-based pressure-sensitive adhesive layer to produce a surface-modified polyisobutylene-based pressure-sensitive adhesive layer.

Thereafter, this surface-modified polyisobutylene-based pressure-sensitive adhesive layer was aged at 60°C for 4 days to thereby diffuse molecules of the polymer of the surface-modifying layer into the pressure-sensitive adhesive layer and accelerate the crosslinking reaction in the pressure-sensitive adhesive layer between the hydroxyl groups of the polyisobutylene modified with hydroxyl at each end and the isocyanate groups of the crosslinking agent (trade name "Coronate HX"). Thus, a polyisobutylene-based pressure-sensitive adhesive tape the surface of which had been modified with the acrylic polymer was obtained.

### EXAMPLE 2

An acrylic polymer (copolymer) having a weight-average molecular weight of about 500,000 formed from 57 parts by weight of 2-ethylhexyl acrylate, 43 parts by weight of methyl acrylate, and 1 part by weight of glycidyl methacrylate was dissolved in ethyl acetate so as to result in a solid concentration of 0.05% by weight. Thus, an acrylic polymer solution was obtained.

A plastic film [thickness of the plastic film, 40 µm; composition of the plastic film, polypropylene/polyethylene=9/1 (by weight)] having the same 10 µm-thick polyisobutylene-based pressure-sensitive adhesive layer as in Example 1 formed thereon was treated in the following manner before the crosslinking reaction of the polyisobutylene-based pressure-sensitive adhesive layer proceeded sufficiently. The plastic film was immersed in the acrylic polymer solution for 1 minute, subsequently vertically pulled out of the solution at a rate of 40 mm/min, and then dried at 80°C for 3 minutes. Thus, a thin layer of the acrylic polymer (surface-modifying layer) was physically formed on the surface of the polyisobutylene-based pressure-sensitive adhesive layer to produce a surface-modified polyisobutylene-based pressure-sensitive adhesive layer.

Thereafter, this surface-modified polyisobutylene-based pressure-sensitive adhesive layer was aged at 60°C for 4 days to thereby diffuse molecules of the polymer of the surface-modifying layer into the pressure-sensitive adhesive layer and accelerate the crosslinking reaction in the pressure-sensitive adhesive layer between the hydroxyl groups of the polyisobutylene modified with hydroxyl at each end and the isocyanate groups of the crosslinking agent (trade name "Coronate HX"). Thus, a polyisobutylene-based pressure-sensitive adhesive tape the surface of which had been modified with the acrylic polymer was obtained.

### COMPARATIVE EXAMPLE 1

The same 10 µm-thick polyisobutylene-based pressure-sensitive adhesive layer as in Example 1 was formed. This pressure-sensitive adhesive layer was not subjected to the surface modification treatment with an acrylic polymer. Thus, a surface-unmodified polyisobutylene-based pressure-sensitive adhesive tape was obtained.

### COMPARATIVE EXAMPLE 2

Polyisobutylene having a weight-average molecular weight of 800,000 was dissolved in toluene so as to result in a solid concentration of 10% by weight to thereby obtain a polyisobutylene solution. To 100 parts by weight on a solid basis (polyisobutylene) of this polyisobutylene solution was added 6 parts by weight of a polyisobutylene modified with a hydroxyl group at each end and having a number-average molecular weight of 5,600 (manufactured by Kaneka Corp.). Thereto was further added 0.1 part by weight of dioctyltin dilaurate (trade name "OL-1", manufactured by Tokyo Fine Chemical Co., Ltd.). These ingredients were mixed uniformly. The resultant solution was applied to a 40 µm-thick plastic film made of a polypropylene/polyethylene blend (weight ratio, 9/1). The coating was dried at 80°C for 3 minutes to form a polyisobutylene-based pressure-sensitive adhesive layer having a thickness of 10 µm on the plastic film. The crosslinking agent having isocyanate groups (trade name "Coronate HX") was not added here.

On the other hand, an acrylic polymer (copolymer) having a weight-average molecular weight of about 500,000 formed from 100 parts by weight of butyl acrylate and 1.1 part by weight of glycidyl methacrylate was dissolved in ethyl acetate so as to result in a solid concentration of 0.05% by weight. Thus, an acrylic polymer solution was obtained.

Before the crosslinking reaction of the polyisobutylene-based pressure-sensitive adhesive layer proceeded sufficiently, the plastic film having the polyisobutylene-based pressure-sensitive adhesive layer was treated in the following manner. The plastic film was immersed in the acrylic polymer solution for 1 minute, subsequently vertically pulled out of the solution at a rate of 40 mm/min, and then dried at 80°C for 3 minutes. Thus, a thin layer of the acrylic polymer (surface-modifying layer) was physically formed on the surface of the polyisobutylene-based pressure-sensitive adhesive layer to produce a surface-modified polyisobutylene-based pressure-sensitive adhesive layer.

Thereafter, this surface-modified polyisobutylene-based pressure-sensitive adhesive layer was aged at 60°C for 4 days. Thus, a polyisobutylene-based pressure-sensitive adhesive tape the surface of which had been modified with the acrylic polymer was obtained.

### COMPARATIVE EXAMPLE 3

Polyisobutylene having a weight-average molecular weight of 800,000 was dissolved in toluene so as to result in a solid concentration of 10% by weight to thereby obtain a polyisobutylene solution. To 100 parts by weight on a solid basis (polyisobutylene) of this polyisobutylene solution was added 12 parts by weight of a polyisobutylene modified with a hydroxyl group at each end and having a number-average molecular weight of 5,600 (manufactured by Kaneka Corp.). Thereto was further added 4 parts by weight of a polyfunctional isocyanate compound (trade name "Coronate HX", manufactured by Nippon Polyurethane Co., Ltd.). These ingredients were mixed uniformly. The resultant solution was applied to a 40 µm-thick plastic film made of a polypropylene/polyethylene blend (weight ratio, 9/1). The coating was dried at 80°C for 3 minutes to form a polyisobutylene-based pressure-sensitive adhesive layer having a thickness of 10 µm on the plastic film. The dioctyltin dilaurate (trade name "OL-1", manufactured by Tokyo Fine Chemical Co., Ltd.) as a reaction catalyst was not added here.

On the other hand, an acrylic polymer (copolymer) having a weight-average molecular weight of about 500,000 formed from 100 parts by weight of butyl acrylate and 1.1 part by weight of glycidyl methacrylate was dissolved in ethyl acetate so as to result in a solid concentration of 0.05% by weight. Thus, an acrylic polymer solution was obtained.

Before the crosslinking reaction of the polyisobutylene-based pressure-sensitive adhesive layer proceeded sufficiently, the plastic film having the polyisobutylene-based pressure-sensitive adhesive layer was treated in the following manner. The plastic film was immersed in the acrylic polymer solution for 1 minute, subsequently vertically pulled out of the solution at a rate of 40 mm/min, and then dried at 80°C for 3 minutes. Thus, a thin layer of the acrylic polymer (surface-modifying layer) was physically formed on the surface of the polyisobutylene-based pressure-sensitive adhesive layer to produce a surface-modified polyisobutylene-based pressure-sensitive adhesive layer. Thus, a polyisobutylene-based pressure-sensitive adhesive tape the surface of which had been modified with the acrylic polymer was obtained. This pressure-sensitive adhesive layer had not undergone the 4-day aging at 60°C.

### (Analysis of Surface-Modifying Layer)

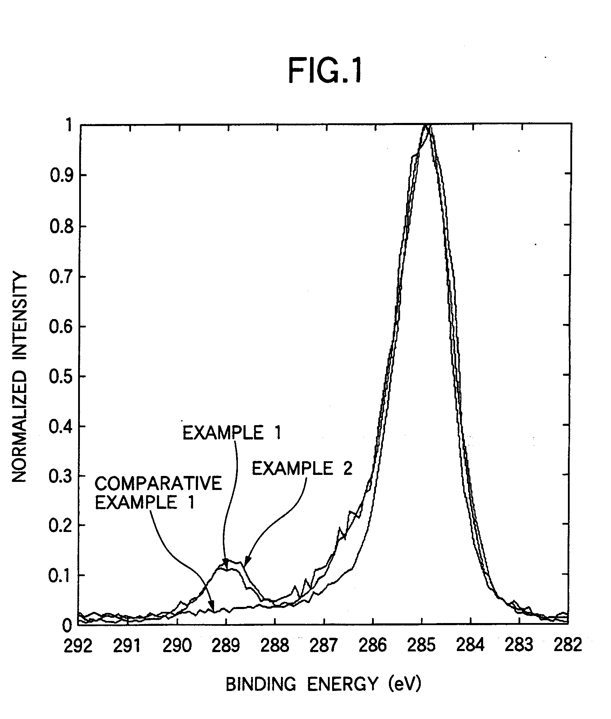

The surface of the surface-modified polyisobutylene-based pressure-sensitive adhesive layer obtained in each of Examples 1 and 2 and Comparative Example 1 was analyzed by X-ray photoelectron spectroscopy (ESCA) to determine the proportions (atomic %) of the elements constituting the pressure-sensitive adhesive surface. The results obtained are shown in Table 1. Furthermore, waveform analysis for C₁S (1S orbit for carbon atom) was conducted under the following conditions, and the results obtained are shown in Fig. 1. In the graphs shown in Fig. 1, the abscissa indicates binding energy (eV) and the ordinate indicates the amount of photoelectrons for C₁S (1S orbit for carbon atom) per second normalized with the photoelectron amount at the maximum peak being 1 (normalized intensity).
Apparatus: trade name "ESCA 5400" manufactured by ULVAC-PHI, INC.
X-ray source: Mg
Output: 300 W
Accelerating voltage: 15 kV
Photoelectron takeout angle: 45°
Analysis area: 1.5 mm x 1.5 mm

**TABLE 1**

| | Proportion of element (atomic %) | | |
|---|---|---|---|
| | Carbon atom (C) | Nitrogen atom (N) | Oxygen atom (O) |
| Example 1 | 86.7 | 0 | 13.3 |
| Example 2 | 85.0 | 0 | 15.0 |
| Comparative Example 1 | 98.0 | 0.8 | 1.2 |

Table 1 shows that the surfaces of the polyisobutylene-based pressure-sensitive adhesive layers obtained in Examples 1 and 2 each were considerably different in composition from the surface of the polybutylene-based pressure-sensitive adhesive layer obtained in Comparative Example 1 and had a far higher oxygen proportion than that in Comparative Example 1. The results of the waveform analysis for C₁S of these pressure-sensitive adhesive layers show the following. The pressure-sensitive adhesive layers of Examples 1 and 2 each showed a peak attributable to carbonyl groups at a binding energy around 289 eV. This peak was not observed in Comparative Example 1, and can be thought to be derived from the acrylic ester(s). It can therefore be ascertained that the surface of each of the pressure-sensitive adhesive layers obtained in Examples 1 and 2 had been modified with the acrylic polymer.

### (Section Photograph Examination by TEM)

Subsequently, the surface-modified polyisobutylene-based pressure-sensitive adhesive obtained in Example 1 was subjected to analysis by TEM (transmission electron microscopy) in which a photograph of a section around the surface was examined. This section photograph was taken by UBE Scientific Analysis Laboratory, Inc.

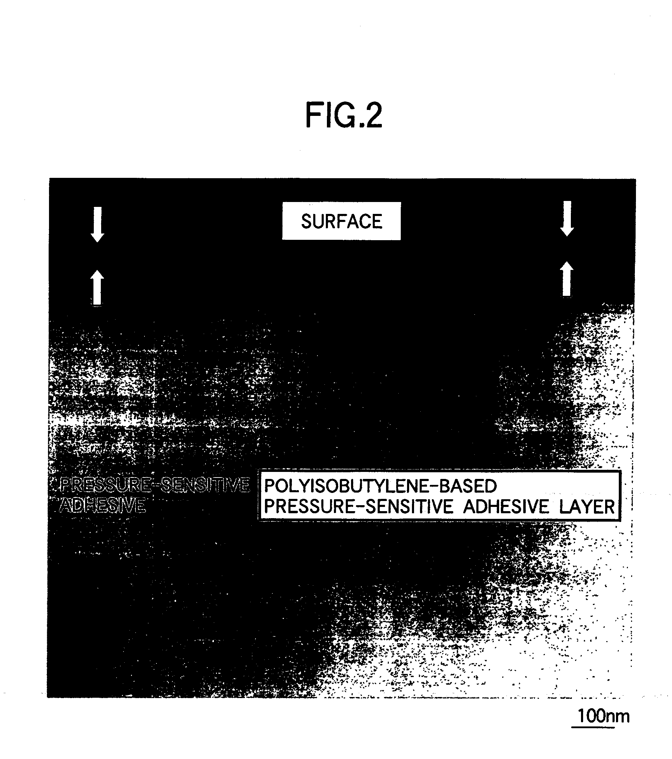

The specific procedure was as follows. A sample was embedded in an epoxy resin, and a section of the embedded sample was prepared with an ultramicrotome. This section was dyed with a metal oxide, and a section to be examined was produced by the ultrathin sectioning method and examined by TEM. As a result, the section photograph shown in Fig. 2 was obtained. The apparatus used for the examination was "HITACHI H-7100FA", manufactured by Hitachi, Ltd., which was operated at an accelerating voltage of 100 kV. It can be ascertained from Fig. 2 that the surface-modified polyisobutylene-based pressure-sensitive adhesive obtained in Example 1 had, on the surface thereof, a thin layer having a thickness of about 50 nm, which is thought to be an acrylic polymer layer.

### (Evaluation of Adhesion of Surface-Modifying Layer)

The pressure-sensitive adhesive tapes obtained in Examples 1 and 2 and Comparative Examples 2 and 3 were cut into a width of 25 mm. Each of the resultant tape samples was applied to an automotive coating film (copper sheet coated with acrylic-melamine) by pressing the tape against the coating film by rolling a 2-kg rubber roller forward and backward once on the tape. The tape samples applied were subjected to an accelerated heat test at 80°C for 4 days and then peeled off to evaluate the transfer of the pressure-sensitive adhesive to the coating film, i.e., the adhesion of the surface-modifying layer to the pressure-sensitive adhesive layer. The results obtained are shown in Table 2. The transfer was sensorily evaluated in five grades ranging from point 1 to point 5, with the case in which considerable transfer was observed being taken as point 1 and the case in which no transfer was observed being taken as point 5.

**TABLE 2**

| | | Transfer of pressure - sensitive adhesive to coating film |
|---|---|---|
| Example | 1 | 5 |
| | 2 | 5 |
| Comparative Example | 2 | 4 |
| | 3 | 1 |

It was ascertained from Table 2 that transfer was not visually observed at all in the pressure-sensitive adhesive tapes of Examples 1 and 2, whereas the transfer of the pressure-sensitive adhesive occurred in the pressure-sensitive adhesive tapes of Comparative Examples 2 and 3. These results show that the surface-modifying layers formed in Examples 1 and 2 each had high adhesion to the pressure-sensitive adhesive layer, whereas the surface-modifying layers formed in Comparative Examples 2 and 3 each had insufficient adhesion to the pressure-sensitive adhesive layer.

Differences between the pressure-sensitive adhesive tapes of Examples 1 and 2, which showed high adhesion, and those of Comparative Examples 2 and 3, which showed insufficient adhesion, are as follows. The difference between the adhesive tape of Comparative Example 2 and those of Examples 1 and 2 is that the pressure-sensitive adhesive of the former adhesive tape had no crosslinks because of the nonaddition of a polyfunctional isocyanate compound. The difference between the adhesive tape of Comparative Example 3 and those of Examples 1 and 2 is that the pressure-sensitive adhesive of the former adhesive tape had undergone neither addition of a crosslinking reaction catalyst thereto nor aging and had hence been crosslinked insufficiently. Namely, these differences relate to whether or not the pressure-sensitive adhesive layer had been crosslinked. These results suggest that a surface-modifying layer has high adhesion only when the molecules of the polymers of the surface-modifying layer are caused to sufficiently diffuse from the pressure-sensitive adhesive surface into inner parts of the adhesive and the pressure-sensitive adhesive is sufficiently crosslinked thereafter.

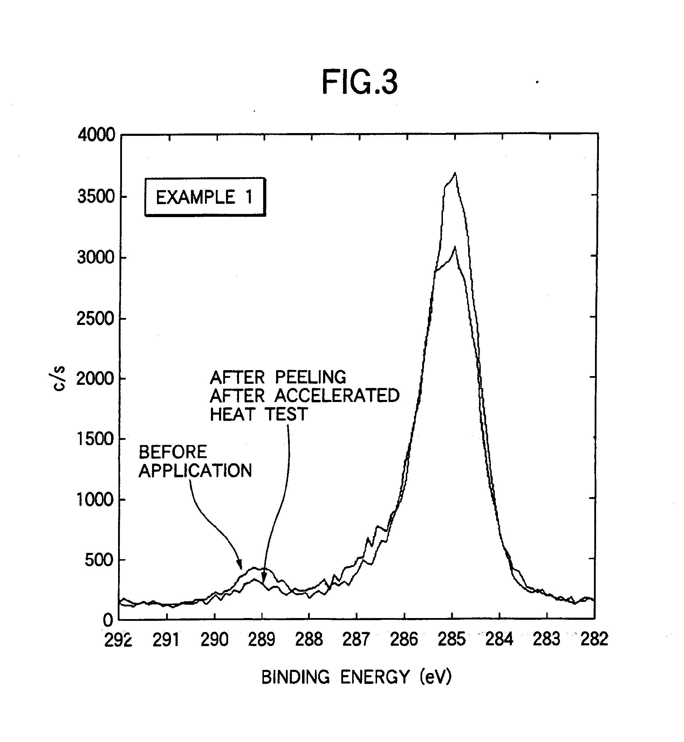

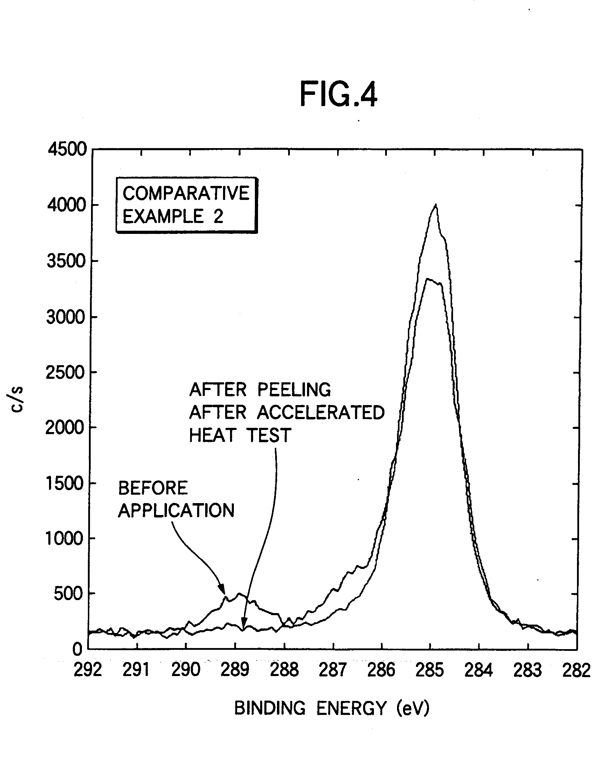

The surface-modified pressure-sensitive adhesive tapes obtained in Example 1 and Comparative Example 2 were subjected to the analysis by X-ray photoelectron spectroscopy (ESCA) and the waveform analysis for C₁S, before the application for the adhesion evaluation described above and after peeling after the accelerated heat test. The results obtained are shown in Figs. 3 and 4. In the graphs shown in Figs. 3 and 4, the abscissa indicates binding energy (eV) and the ordinate indicates the amount of photoelectrons for C₁S (1S orbit for carbon atom) per second.

The adhesive tape of Example 1 which had not been applied and that which had been peeled off after the accelerated heat test each showed a peak attributable to surface carbonyl groups derived from the acrylic ester. In contrast, with respect to Comparative Example 2, only the adhesive tape which had not been applied showed a peak attributable to carbonyl groups and the adhesive tape which had been peeled off after the accelerated heat test did not show the peak. These results also show that the surface-modifying layer formed in Example 1 had high adhesion, whereas the surface-modifying layer formed in Comparative Example 2 had poor adhesion and was transferred to the coating film through the accelerate heat test.

According to the invention, when a surface of a pressure-sensitive adhesive is modified with a layer of a polymer different from the polymer constituting the adhesive, the polymer layer can be physically fixed to the pressure-sensitive adhesive surface highly tenaciously. Since no chemical reaction between the layer consisting only of a pressure-sensitive adhesive and the surface-modifying layer is utilized in fixing the surface-modifying layer to the pressure-sensitive adhesive base layer, there are no limitations on combinations of functional groups, etc. in material selection, and a combination of the two layers can be selected from an exceedingly wide range.

Consequently, the invention enables a bulk function required of the pressure-sensitive adhesive and a surface function required of the surface (interface between the adhesive tape or sheet and an adherend) to be separately designed/optimized. A pressure-sensitive adhesive having better functions can hence be obtained. Furthermore, even when there is a trade-off relationship between the bulk function and surface (interfacial) function required and it has been difficult to reconcile the two functions with a single pressure-sensitive adhesive layer, the invention can simultaneously attain these functions.

While the invention has been described in detail and with reference to specific embodiments thereof, it will be apparent to one skilled in the art that various changes and modifications can be made therein without departing from the spirit and scope thereof.

## Claims

1. A surface-modified pressure-sensitive adhesive which comprises a pressure-sensitive adhesive and a surface-modifying layer made of another polymer, the surface-modifying layer being physically fixed to a surface of the pressure-sensitive adhesive.

2. The surface-modified pressure-sensitive adhesive as claimed in claim 1, wherein molecules of the polymer constituting the surface-modifying layer have been diffused from the pressure-sensitive adhesive surface into inner parts of the adhesive and the pressure-sensitive adhesive has been crosslinked while the molecular chains of the polymer constituting the surface-modifying layer are kept being partly embedded in the pressure-sensitive adhesive.

3. The surface-modified pressure-sensitive adhesive as claimed in claim 1, wherein the surface-modifying layer has a thickness of 1 µm or smaller.

4. A method of modifying a surface of a pressure-sensitive adhesive by forming a surface-modifying layer physically fixed to the pressure-sensitive adhesive surface, the method comprising the following steps (A) to (C):
step (A): forming a surface-modifying layer made of another polymer on the surface of the pressure-sensitive adhesive without physically fixing the layer to the surface;
step (B): causing molecules of the polymer constituting the surface-modifying layer to diffuse from the pressure-sensitive adhesive surface into inner parts of the adhesive; and
step (C): crosslinking the pressure-sensitive adhesive while keeping the molecular chains of the polymer constituting the surface-modifying layer in the state of being partly embedded in the pressure-sensitive adhesive to thereby physically fix the surface-modifying layer to the surface of the pressure-sensitive adhesive.

5. A pressure-sensitive adhesive tape which has a pressure-sensitive adhesive layer comprising the surface-modified pressure-sensitive adhesive as claimed in claim 1.

6. A pressure-sensitive adhesive sheet which has a pressure-sensitive adhesive layer comprising the surface-modified pressure-sensitive adhesive as claimed in claim 1.
